# EUROPEAN PATENT APPLICATION

(11) **EP 2 627 129 A1**
(43) Date of publication of application: **14.08.2013**
(21) Application number: 11830761.0
(22) Date of filing: 07.10.2011
(51) Int. Cl.: H04W 48/18, H04W 36/14, H04W 84/10, H04W 88/06, H04W 88/12

(54) **COMMUNICATION CONTROL SYSTEM AND MOBILE STATION CONTROL METHOD**

(30) Priority: 07.10.2010 JP 2010227611
(71) Applicant: NTT DOCOMO, INC., Chiyoda-ku Tokyo 100-6150 (JP)
(72) Inventor: AOYAGI, Kenichiro, Tokyo 100-6150 (JP); TAKAGI, Yukiko, Tokyo 100-6150 (JP); NAKAMURA, Yuichiro, Tokyo 100-6150 (JP); OKAMOTO, Takeshi, Tokyo 100-6150 (JP)
(74) Representative: HOFFMANN EITLE
(86) International application number: PCT/JP2011/073177
(87) International publication number: WO 2012/046830

(57) **Abstract**

To provide a communication control system and a mobile station control method, in which as soon as a communication in a radio communication system to which a mobile station performed fallback is terminated, the mobile station is quickly returned to a connection with a base station in a radio communication system before the fallback. A RNC 210 includes an information element acquisition unit configured to acquire an information element used to allow the return to a base station before the fallback from an LTE system 10, and a mobile station control unit configured to execute the control to allow the mobile station 300 to return to the HeNB 110. The mobile station control unit executes the control based on the communication state of the mobile station 300 in the 3G system 20.

## Description

### TECHNICAL FIELD

The present invention relates to a communication control system and a mobile station control method, in which a mobile station having executed fallback to another radio communication system is returned to a base station connected before the fallback.

### BACKGROUND ART

For a mobile station accessible to multiple radio communication systems such as a 3G (Wideband-CDMA) system (hereinafter, 3G) and a Long Term Evolution system (hereinafter, LTE), various methods (Inter-RAT mobility) of controlling the mobile station between the radio communication systems have been specified.

For example, it is specified that when a mobile station present in an LTE transmits a connection request for a CS call using a circuit switch network (CS domain), the mobile station executes fallback to the CS domain in the 3G (CSFB) and executes call originating processing in the 3G to which the mobile station executed the fallback (see Non-patent Document 1).

Also, the number of small-sized base stations, each of which is installed in a home or the like by a user of a mobile station, such as a femtocell, have been recently increased (see, for example, Non-patent document 2).

When a mobile station present in such a small-sized base station (e.g., HeNB) executes CSFB to the 3G, it is favorable that the mobile station is returned to a connection with the HeNB connected before the CSFB was executed as soon as a communication (e.g., voice communication) in the 3G is terminated.

In order for the mobile station to achieve such a returning operation, when the mobile station has an Autonomous Search function to autonomously search a CSG (Closed Subscriber Group) /Hybrid cell to which only a previously permitted mobile station can make an access, and when the HeNB configures a CSG/Hybrid cell, the mobile station can be returned to the connection with the HeNB connected before the CSFB was executed.

### PRIOR ART DOCUMENT

### NON-PATENT DOCUMENT

Non-patent Document 1: 3GPP TS 24.301, Technical Specification Group Core Network and Terminals; Non-Access-Stratum (NAS) protocol for Evolved Packet System (EPS); Stage 3
Non-patent Document 2: 3GPP TS 22.220, Service requirements for Home NodeBs (UMTS) and Home eNodeBs (LTE)

### SUMMARY OF THE INVENTION

However, when the mobile station does not have the CSG/Hybrid cell search function or when the HeNB does not configure the CSG/Hybrid cell or configures a so-called an open-type cell, the mobile station searches a base station according to a logic of searching a cell including a normal macro cell and the like, and is connected.

In other words, in such a case, it is sometimes difficult for the mobile station to return to the connection with the base station (HeNB) connected before the CSFB was executed.

For this reason, an objective of the present invention is to provide a communication control system and a mobile station control method, in which as soon as a communication in a radio communication system to which a mobile station performed fallback is terminated, the mobile station is quickly returned to a connection with a base station in a radio communication system before the fallback.

A first feature of the present invention is a communication control system (e.g., RNC 210) configured to execute control to allow a mobile station (mobile station 300) having executed fallback from a first radio communication system (LTE system 10) to a second radio communication system (3G system 20) to return to a base station (HeNB 110) connected before the fallback, including: an information element acquisition unit (IE acquisition unit 211) configured to acquire an information element used to allow the return to the base station from the first radio communication system; and a mobile station control unit (mobile station control unit 216) configured to execute control to allow the mobile station to return to the base station using the information element acquired by the information element acquisition unit, in which the mobile station control unit executes the control based on a communication state of the mobile station in the second radio communication system.

In the above-described feature of the present invention, the mobile station control unit may execute the control when a communication of the mobile station in the second radio communication system elapses a predetermined period of time.

In the above-described feature of the present invention, the mobile station control unit may execute the control when the mobile station releases a radio link with the second radio communication system.

In the above-described feature of the invention, the mobile station control unit may execute the control when a predetermined type of communication of the mobile station via the second radio communication system is terminated.

In the above-described feature of the invention, the mobile station control unit may execute the control when the mobile station is in communication with, or terminates communication with, a predetermined area or a predetermined base station via the second radio communication system.

A second feature of the present invention is a mobile station control method of executing control to allow a mobile station having executed fallback from a first radio communication system to a second radio communication system to return to a base station connected before the fallback, including the steps of: acquiring an information element used to allow the return to the base station from the first radio communication system, and executing control to allow the mobile station to return to the base station using the information element acquired by the step of information element acquisition, in the step of executing the control, the control is executed based on a communication state of the mobile station in the second radio communication system.

### BRIEF DESCRIPTION OF DRAWINGS

[Fig. 1] Fig. 1 is an overall schematic configuration diagram of a radio communication system according to an embodiment of the present invention.
[Fig. 2] Fig. 2 is a functional block configuration diagram of an HeNB 110 according to the embodiment of the present invention.
[Fig. 3] Fig. 3 is a functional block configuration diagram of a RNC 210 according to the embodiment of the present invention.
[Fig. 4] Fig. 4 is a drawing showing a communication sequence (in the case of PS HANDOVER) of a radio communication system according to the embodiment of the present invention.
[Fig. 5] Fig. 5 is a drawing showing a communication sequence (in the case of Redirection) of a radio communication system according to the embodiment of the present invention.

### MODES FOR CARRYING OUT THE INVENTION

Hereinafter, an embodiment of the present invention is described. Note that in the following description of the drawings, same or similar reference signs denote same or similar portions. However, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of Radio Communication System

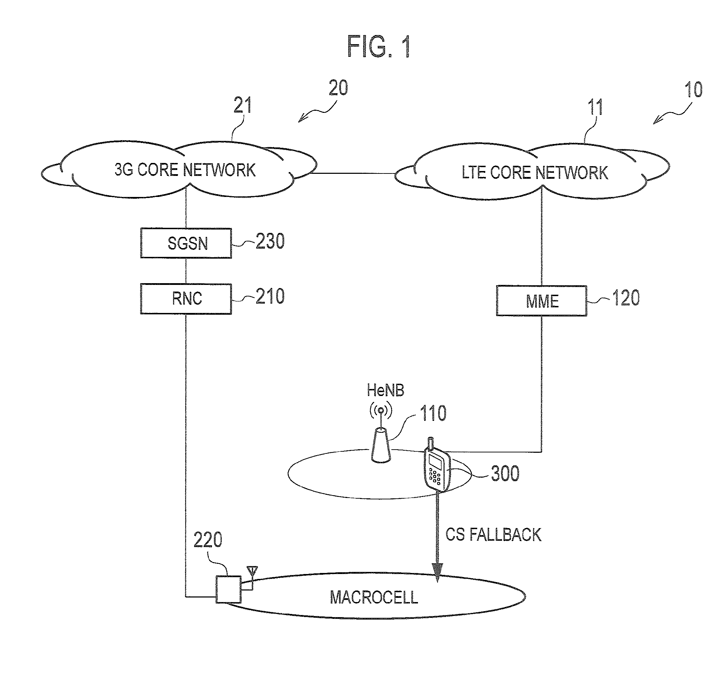

Fig. 1 is an overall schematic configuration diagram of a radio communication system according to the present embodiment. As shown in Fig. 1, the radio communication system according to the embodiment includes an LTE system 10 and a 3G system 20.

The LTE system 10 (first radio communication system) is a radio communication system conforming to the LTE scheme. The 3G system 20 (second radio communication system) is a radio communication system conforming to the 3G scheme (W-CDMA). In other words, the LTE system 10 and the 3G system 20 use different radio access technologies (RAT).

The LTE system 10 includes an LTE core network 11, an HeNB 110, and an MME 120. The 3G system 20 includes a 3G core network 21, a RNC 210, a BTS 220, and an SGSN 230 (Serving GPRS Support Node).

The mobile station 300 can be connected by radio with the LTE system 10 and the 3G system 20. Specifically, the mobile station 300 executes radio communications with the HeNB 110 and is connected with the LTE system 10. Moreover, the mobile station 300 executes radio communications with the BTS 220 and is connected with the 3G system 20.

In the embodiment, the RNC 210 executes control to allow the mobile station 300 having executed fallback from the LTE system 10 to the 3G system 20 to return to the base station (HeNB 110) connected before the fallback. In the embodiment, the RNC 210 configures a communication control system.

### (2) Functional Block Configuration of Radio Communication System

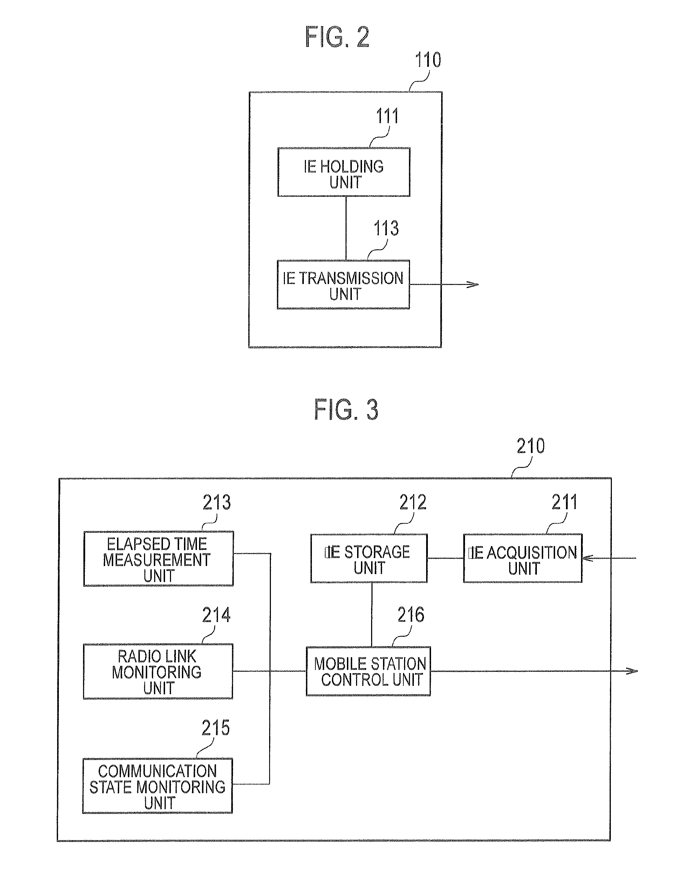

Hereinafter, the functional block configurations of major devices among the devices configuring the radio communication system are described. Fig. 2 is a functional block configuration diagram of the HeNB 110. Also, Fig. 3 is a functional block configuration diagram of the RNC 210.

### (2.1) HeNB 110

As shown in Fig. 2, the HeNB 110 includes an IE holding unit 111 and an IE transmission unit 113.

The IE holding unit 111 identifies the HeNB 110 and holds an information element (Recovery IE) used to allow the mobile station 300 to return to the HeNB (base station) before the fallback. Specifically, the IE holding unit 111 may contain IE such as Cell Identity specifying the HeNB itself, IE specifying a state where the HeNB is installed, such as a frequency, location information, or a carrier, IE designating a radio communication system (RAT) standing by with priority, such as Subscriber Profile ID, or Cause of S1AP/RANAP (Radio Access Network Application Part).

The IE transmission unit 113 transmits the information element held by the IE holding unit 111 to the MME 120 at a predetermined timing. For example, the IE transmission unit 113 can transmit the information element to the MME 120 when the mobile station 300 performs the fallback (handover) from the LTE system 10 to the 3G system 20.

### (2.2) RNC 210

As shown in Fig. 3, the RNC 210 includes an information element (IE) acquisition unit 211, an information element (IE) storage unit 212, an elapsed time measurement unit 213, a radio link monitoring unit 214, a communication state monitoring unit 215, and a mobile station control unit 216.

The IE acquisition unit 211 acquires an information element (Recovery IE) used to allow identification of the HeNB 110 from the LTE system 10. In the embodiment, the IE acquisition unit 211 configures an information element acquisition unit. Specifically, the IE acquisition unit 211 acquires the information element (Recovery IE) from the MME 120.

The IE storage unit 212 stores the information element (Recovery IE) acquired by the IE acquisition unit 211.

The elapsed time measurement unit 213 measures an elapsed time of communication of the mobile station 300 in the 3G system 20. Specifically, the elapsed time measurement unit 213 measures an elapsed time of communication (e.g., a call communication) which has been started after the mobile station 300 performed the fallback to the 3G system 20.

The radio link monitoring unit 214 monitors a state of a radio link established by the mobile station 300 with the 3G system 20 (specifically, the BTS 220). Specifically, the radio link monitoring unit 214 monitors whether the radio link is released or not.

The communication state monitoring unit 215 monitors the communication state of the mobile station 300. Specifically, the communication state monitoring unit 215 monitors as to whether a predetermined type of communication (e.g., a voice communication) of the mobile station 300 via the 3G system continues.

The mobile station control unit 216 controls mobility of the mobile station 300. Specifically, the mobile station control unit 216 executes control to allow the mobile station 300 to return to the base station (HeNB 110) connected before the fallback by using the information element (Recovery IE) acquired by the IE acquisition unit 211.

The mobile station control unit 216 executes the control based on the communication state of the mobile station 300 in the 3G system 20.

Specifically, when the communication of the mobile station 300 in the 3G system 20 has elapsed a predetermined period of time (e.g., 10 minutes), the mobile station control unit 216 can executes the control to allow the mobile station 300 to return to the base station (HeNB 110) having had been connected before the fallback based on the monitoring result acquired by the elapsed time measurement unit 213.

Also, when the mobile station 300 releases the radio link with the 3G system 20 (BTS 220), the mobile station control unit 216 can execute the control to allow the mobile station 300 to return to the base station (HeNB 110) connected before the fallback.

Furthermore, when the mobile station 300 terminates the predetermined type of communication via the 3G system 20, the mobile station control unit 216 can execute the control to allow the mobile station 300 to return to the base station (HeNB 110) connected before the fallback. Note that the mobile station control unit 216 may execute the above control during the communication of the mobile station 300 with a predetermined area or a predetermined base station via the 3G system 20 or when the communication is terminated.

Also, even in a state where a coverage area of the communication area in the LTE system 10 is insufficient and a mobile station is caused to be preferentially stand by in the 3G system 20, the mobile station control unit 216 can lead only the mobile station 300 having executed the fallback (CSFC) from the HeNB 110 to the LTE system 10 and does not lead a non-CSFB mobile station to the LTE system 10.

### (3) Operation of Radio Communication System

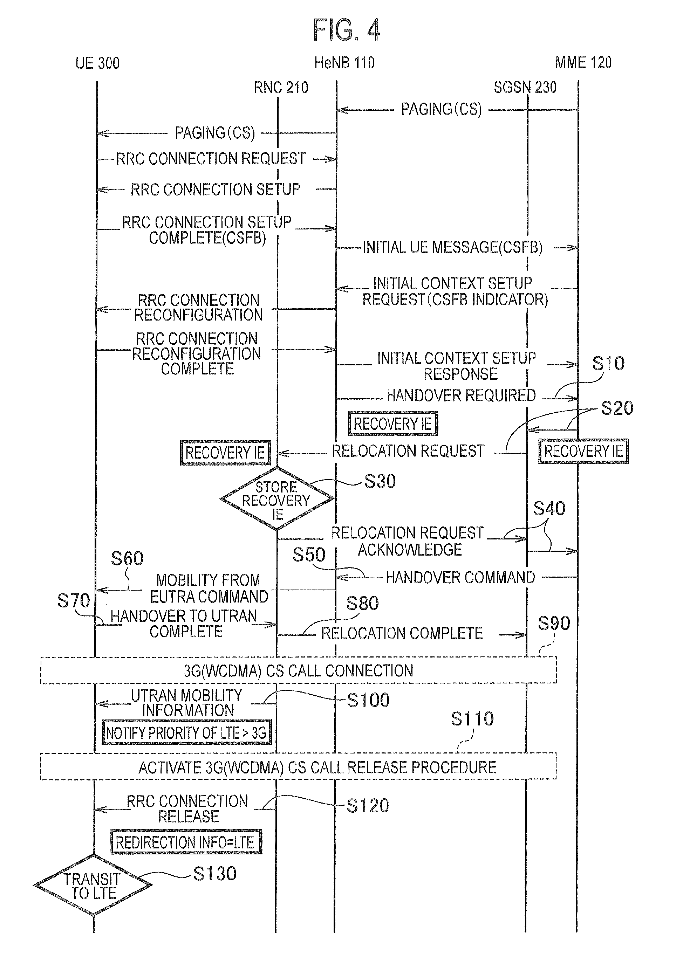

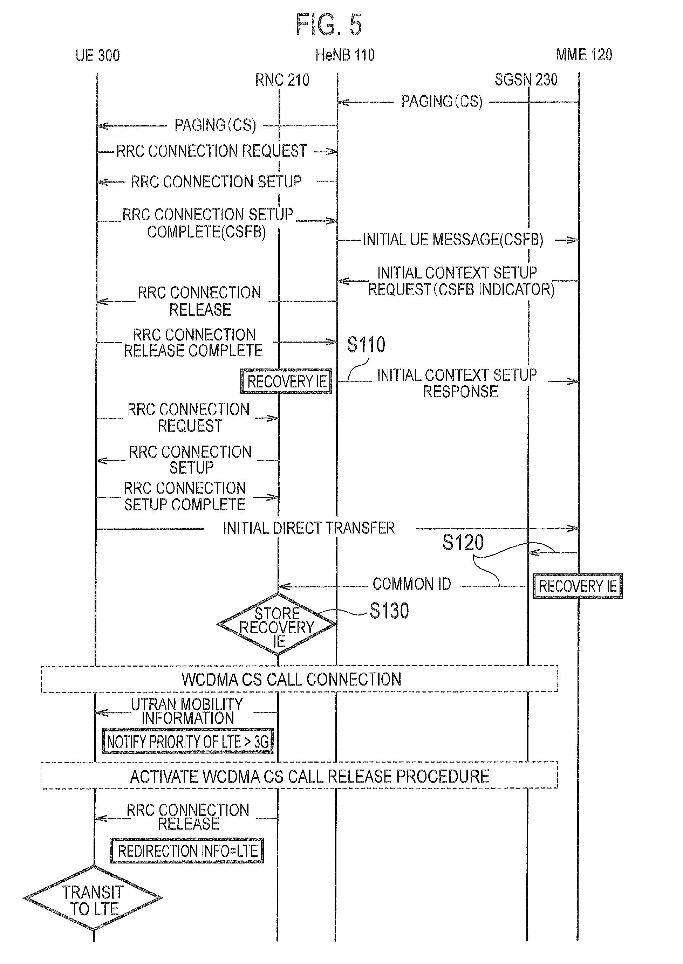

Hereinafter, referring to Figs. 4 and 5, an operation of the above-described radio communication system is described. Figs. 4 and 5 are drawings, each showing a communication sequence of a radio communication system according to the embodiment.

### (3.1) Operational Example 1

Fig. 4 shows a communication sequence in a case where the mobile station 300 performs CSFB from the LTE system 10 to the 3G system 20.

As shown in Fig. 4, if there is an incoming call of a voice communication to the mobile station 300 when the mobile station 300 is in connection with the HeNB 110, i.e., when the mobile station 300 is present in the LTE system 10, the MME 120 notifies the HeNB 110 of the execution of the CSFB to the 3G system 20 when the mobile station 300 receives a PAGING signal based on the paging signal from the LTE core network 11 (see Fig. 1) side.

When the CSFB is activated, the HeNB 110 notifies the MME 120 of information element (Recovery IE) used to allow identification of the HeNB 110 with which the mobile station 300 was in connection (Step S10). In addition, the MME 120 notifies the RNC 210 of the information element (Steps S20 and S30).

The information element (Recovery IE) is used for returning the mobile station 300 to the LTE system 10 as soon as the voice communication in the 3G system 20 is terminated. The information element may be an IE such as Cell Identity specifying the HeNB itself, an IE specifying a state where the HeNB is installed, such as a frequency, location information, or a carrier, an IE designating a radio communication system (RAT) standing by with priority, such as Subscriber Profile ID, or Cause of S1AP/RANAP (Radio Access Network Application Part) . In addition, these information elements may be notified in a state of being contained in Transparent Container in the handover procedure in the PS HANDOVER. Or, it may be notified to the 3G system 20 side with the RANAP via the LTE core network 11 and the 3G core network 21 with the S1AP.

The RNC 210 stores the information element which is notified from the MME 120 (Step S30). After that the RNC 210 executes CSFB with the MME 120 and the mobile station 300 to the 3G system 20 (Steps S40 to S80). The mobile station 300 connects a CS call (voice communication) via the 3G system 20 (Step S90).

The RNC 210 notifies that the LTE system 10 should be preferentially selected rather than the 3G system 20 with UTRAN MOBILITY INFORMATION so that the mobile station 300 can transit (recover) to the LTE system 10 after the CS call is released (Step S100).

The RNC 210 activates releasing procedures for the CS call when the CS call of the mobile station 300 is terminated. Specifically, the RNC 210 activates any of the Cell Reselection of the LTE system 10 with Dedicated Priority, designation of a using frequency of the HeNB 110 with Redirection, MEASUREMENT measuring a state of the HeNB 110, and Inter-RAT Handover, so that the mobile station 300 is transitioned to the LTE system 10 (Step S120).

The mobile station 300 transits to the LTE system 10 based on the control from the RNC 210 (Step S130). In other words, after the CS call is released, the RNC 210 can notify (Redirection info = LTE) the 3G system 20 area (macro cell) corresponding to an effective period of time of the information element or can cause only a mobile station having been present in a cell formed by the HeNB 110 to transit (recover) to the LTE system 10 according to the predetermined logic of searching a cell.

### (3.2) Operational Example 2

Fig. 5 shows a communication sequence when the mobile station 300 performs CSFB from the LTE system 10 to the 3G system 20 with Redirection. Hereinafter, a portion different from that of the communication sequence shown in Fig. 4 is mainly described.

As shown in Fig. 5, the HeNB 110 notifies the MME 120 of Recovery IE used to allow identification of a base station to which the mobile station 300 should return in a state where the Recovery IE is contained in INITIAL CONTEXT SET UP COMPLETE message.

The MME 120 notifies the RNC 210 of the Recovery IE received from the HeNB 110 in a state where the Recovery IE is contained in COMMON ID (Step S120). Specifically, the MME 120 notifies the RNC 210 of the Recovery IE via the SGSN 230.

The RNC 210 stores the Recovery IE which is notified from the MME 120 in a state of being contained in the COMMON ID. The processing after the RNC 210 stores the Recovery IE is same as that of the communication sequence shown in Fig. 4.

### (4) Advantageous Effects

As described above, in a mobile communication system according to the present embodiment, the RNC 210 acquires the information element (Recovery IE) used to allow identification of the HeNB 110 with which the mobile station was in connection from the LTE system 10. The RNC 210 returns the mobile station 300 to the HeNB 110 using the acquired information element after the communication with the CSFB is terminated.

Specifically, the RNC 210 can return the mobile station 300 to the HeNB 110 (i) when the communication of the mobile station 300 in the 3G system 20 elapses a predetermined period of time, (ii) when the mobile station 300 releases a radio link with the 3G system 20, and (iii) when a predetermined type of communication of the mobile station 300 via the 3G system 20 is terminated.

Accordingly, even in a case where the mobile station 300 does not have a CSG/Hybrid cell function or if the HeNB 110 does not configure a CSG/Hybrid cell, the mobile station 300 can return to the HeNB 110 (small sized base station) in the LTE system 10 before the fallback as soon as the mobile station 300 terminates the communication in the 3G system 20 to which the mobile station 300 performed the fallback.

### (5) Other Embodiments

As described above, although the present invention has been disclosed through an embodiment of the invention, it should not be understood that the description and drawings which constitute one part of this disclosure limit the invention. Various alternative embodiments will be apparent for those who are in the art from this disclosure.

For example, in the above-described embodiment, the control in which the RNC 210 stores the acquired Recovery IE and returns the mobile station 300 to the HeNB 110 is executed. However, these functions may be executed in individual devices. For example, the control in which the RNC 210 stores Recovery IE and returns the mobile station 300 to the HeNB 110 may be executed on the LTE system 10 side.

Also, in the above-described embodiment, the MME 120 relays the Recovery IE to the RNC 210, but the HeNB 110 may relay the Recovery IE to the RNC 210 or the SGSN 230 may relay the Recovery IE to the RNC 210.

In this manner, the present invention naturally includes various embodiments which are not described herein. Accordingly, the technical scope of the present invention is only defined by the invention specifying matters according to the scope of the invention which is apparent from the above description. Note that the entire content of Japanese Patent Application Publication No. 2010-227611 (filed on October 7, 2010) is incorporated herein by reference.

### INDUSTRIAL APPLICABILITY

The characteristics of the present invention can provide a communication control system and a mobile station control method, in which as soon as a communication in a radio communication system to which a mobile station performed fallback is terminated, the mobile station is quickly returned to a connection with a base station in a radio communication system before the fallback.

### EXPLANATION OF THE REFERENCE NUMERALS

10 LTE system
11 LTE core network
20 3G system
21 3G core network
110 HeNB
111 IE holding unit
113 IE transmission unit
120 MME
210 RNC
211 IE acquisition unit
212 IE storage unit
213 elapsed time measurement unit
214 radio link monitoring unit
215 communication state monitoring unit
216 mobile station control unit
220 BTS
230 SGSN
300 mobile station

## Claims

1. A communication control system configured to execute control to allow a mobile station having executed fallback from a first radio communication system to a second radio communication system to return to a base station connected before the fallback, comprising:
an information element acquisition unit configured to acquire an information element used to allow the return to the base station, from the first radio communication system; and
a mobile station control unit configured to execute control to allow the mobile station to return to the base station using the information element acquired by the information element acquisition unit, wherein
the mobile station control unit executes the control based on a communication state of the mobile station in the second radio communication system.

2. The communication control system according to claim 1, wherein the mobile station control unit executes the control when a communication of the mobile station in the second radio communication system has elapsed a predetermined period of time.

3. The communication control system according to claim 1, wherein the mobile station control unit executes the control when the mobile station releases a radio link with the second radio communication system.

4. The communication control system according to claim 1, wherein the mobile station control unit executes the control when a predetermined type of communication of the mobile station via the second radio communication system is terminated.

5. The communication control system according to claim 1, wherein the mobile station control unit leads only a mobile station which has executed fallback to the second radio communication system to return to the base station.

6. The communication control system according to claim 1, wherein the information element is any of an information element specifying the base station itself, an information element specifying a state where the base station is installed, such as a frequency, location information, and carrier information, and an information element designating a radio communication system for which the mobile station preferentially stands by.

7. A mobile station control method of executing control to allow a mobile station having executed fallback from a first radio communication system to a second radio communication system to return to a base station connected before the fallback, comprising the steps of:
acquiring an information element used to allow identification of the base station, from the first radio communication system; and
executing control to allow the mobile station to return to the base station using the information element acquired by the step of information element acquisition, wherein
in the step of executing the control, the control is executed based on a communication state of the mobile station in the second radio communication system.
